# EUROPEAN PATENT SPECIFICATION

(11) **EP 0 520 481 B1**
(45) Date of publication and mention of the grant of the patent: **04.09.1996**
(21) Application number: 92110794.2
(22) Date of filing: 26.06.1992
(51) Int. Cl.: G09G 3/34, G02B 26/08, G09F 9/37

(54) **Modulation method for the deformable mirror device (DMD)**
Modulationsverfahren für verformbare Spiegelvorrichtung (DMD)
Méthode de modulation pour dispositif à miroirs déformables (DMD)

(30) Priority: 27.06.1991 US 722728; 27.06.1991 US 722721
(43) Date of publication of application: 30.12.1992
(73) Proprietor: TEXAS INSTRUMENTS INCORPORATED, Dallas Texas 75265 (US)
(72) Inventor: Sampsell, Jeffrey B., Plano, Texas 75074 (US)
(74) Representative: Leiser, Gottfried, Dipl.-Ing.

(56) References cited:
- EP-A- 0 419 853
- US-A- 4 793 699
- OPTICAL ENGINEERING vol. 30, no. 9, September 1991, US, pp. 1422-1427; R.M. BOYSEL: 'A 128x128 frame-addressed deformable mirror spatial light modulator'
- PROCEEDINGS OF THE SID vol. 24, no. 2, 1983, Los Angeles US, pp. 199-205; L. NORNBECK: '128x128 deformable mirror device'
- U. TIETZE et al.: "Halbleiter-Schaltungstechnik", 5th edition, New York US, Heidelberg DE, Berlin DE: Springer 1980, pages 506-509, 573-575

## Description

(C) Copyright, *M* Texas Instruments Incorporated 1991. A portion of the disclosure of this patent document contains material which is subject to copyright and mask work protection. The copyright and mask work owner has no objection to the facsimile reproduction by anyone of the patent document or the patent disclosure, as it appears in the Patent and Trademark Office patent file or records, but otherwise reserves all copyright and mask work rights whatsoever.

This invention generally relates to analog scan convertors and more specifically to the use of the Deformable Mirror Device (DMD) to implement an analog scan convertor.

Without limiting the scope of the invention, its background is described in connection with systems utilizing an IR sensor. Conventional systems which rely upon a linear IR sensor are being superseded by systems using multiline sensors. These sensors provide increased resolution as well as an associated increase in S/N ratio and a decrease in problems associated with aliasing. These sensors normally contain only the number of pixels needed for scanning the vertical scene dimension due to the complexity of fabrication. The scene data shifted out of these vertical sensors is naturally in the form of a vertical raster. However, the human eye is accustomed to viewing images rastered horizontally. Therefore, these sensors, in general, require a scan convertor in order to recreate the IR image in the visible domain for viewing by humans. A typical digital high dynamic range digital scan convertor to accomplish this task is expensive, bulky, heavy, and consumes a considerable amount of power.

The DMD has several attractive features. The mirror elements have high reflectance over a wide optical bandwidth. Thus, they are capable of optical modulation from the UV to the IR. Pixel response times are typically 10-20 µs and the pixels may be operated in an analog or digital mode. The DMD can function either as an amplitude-dominant or phase-dominant modulator by a simple architectural modification of the mirror. The DMD is compatible with monolithic fabrication on a low-voltage, high density address circuit. Due to the low power dissipation of the DMD, high frame rates (typically 5 kHz and higher) are possible without adverse heating effects.

There are numerous DMD pixel architectures, each designed for particular applications. They may be distinguished by their deformation mode, such as torsion or cantilever, by the pixel shape, and by the hinge support architecture.

In PROCEEDINGS OF THE SID, vol. 24, no. 2, 1983, Los Angeles, USA, pages 199-205, L. Hornbeck: "128 x 128 Deformable Mirror Device", a DMD consisting of an X-Y array of mirror/air gap capacitors that can be electronically line-addressed by an underlying array of transistors is disclosed. The drains of the address transistors are connected to a serial-to-parallel converter. The gates are connected to a decoder. Lines of video are clocked continuously into S/P converter. As each line is entered it is parallel dumped onto a storage register to make room for entry of the next line of data. As the next line is clocked into the delay line, the drain lines are simultaneously charged to voltage levels corresponding to the contents of the storage register. The decoder then momentarily activates a gate, storing that line of video on the flouting source capacitors underlying each mirror/air gap capacitor element. This process continues line by line at a continuous input data rate. A similar deformable mirror device is disclosed in US-A-4 793 699.

### SUMMARY OF THE INVENTION

A method of digitally modulating a DMD system and a digitally modulated DMD system according to the present invention are defined in independent Claims 1 and 14. Dependent Claims 2 to 13 and 15 to 27 concerne particular embodiments of the invention.

According to one aspect of the present invention there is provided:

A method of modulating a DMD system comprising;
receiving at least one data stream of data from an input device;
inputting said data stream into a serial register; and
addressing one or more DMDs with said serial register, the output of the or each DMD being adapted to create one pixel of an image;

Each of the activated DMDs may be turned off individually such that each of the activated DMDs is left on for a period of time equal to a line time multiplied by a weighting for that DMD, whereby the DMDs can be weighted by time. Weighting of the weighted DMDs may be based on the resolution per pixel such that a most significant bit is weighted 1/2, a next most significant bit is weighted 1/4, continuing weighting to a least significant bit which is weighted 1/2^{N}. Alternately, the weighting may be by a predetermined number of DMDs per bit, whereby the DMDs can be weighted by number of DMDs per bit or the weighting may be such that one or more of the DMDs reflect different maximum amounts of light, whereby the DMDs can be weighted by reflecting area and/or reflectance of an individual DMD.

Preferably, the DMDs are imaged onto a solid state detector, the detector is a CCD, and the detector manipulates the image from the DMDs such that the image may be output in a different order from the detector than the image was input to the detector. Alternately, the DMD may be imaged onto the backside of a scan mirror and an image from the backside of the mirror may be optically projected to create an image nearly identical to the image received at the input device. The input device may be a computer.

This may also be a method of modulating a DMD system which can comprise: receiving at least one data stream of data of N bits of resolution from an input device; inputing the data stream into N input shift registers; addressing 2^{N} DMDs with the shift registers, whereby the shift register for a most significant bit addresses 2^{N-1} DMDs, the shift register for a next most significant bit addresses 2^{N-2} DMDs, continuing this addressing scheme to a least significant bit whose shift register addresses 2^{N-N} DMDs and the DMDs combine to create one pixel of an image; and activating the DMDs individually based on the data stream.

This is also a modulated DMD system which generally comprises: N shift registers to receive at least one data stream of data of N bits of resolution from an input device and DMDs addressed by the shift registers, whereby the DMDs combine to create one pixel of an image. Preferably, the shift registers and the DMDs are on a monolithic integrated circuit.

### BRIEF DESCRIPTION OF THE DRAWINGS

Reference will now be made, by way of example, to the accompanying drawings, in which:
FIG. 1 is a conventional IR imaging system;
FIG. 2 is the electronic portion of an advanced IR imaging system;
FIG. 3 is a view of a torsion beam DMD;
FIG. 4 is a top level view of various torsion beam DMD hinge options;
FIG. 5 is a first preferred embodiment of the present invention;
FIG. 6 is a third preferred embodiment of the present invention using pulse width modulation;
FIG. 7 is a block diagram of a portion of the system in FIG. 6.

Corresponding numerals and symbols in the different figures refer to corresponding parts unless otherwise indicated.

### DETAILED DESCRIPTION OF PREFERRED EMBODIMENTS

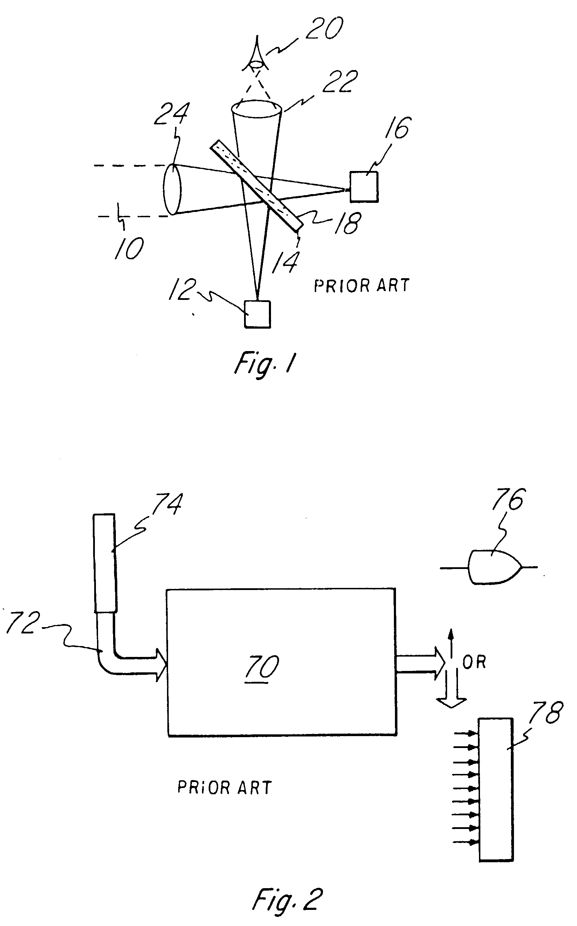

In a conventional IR system (FIG. 1) the input image 10 is focused with an appropriate optical system 24, into the plane of an IR detector 12 configured as a line of discrete pixels. Obviously, only one line of the image 10 can be detected at a given time. Consequently, one element of the imaging system is a mirror 14 pivoted around its central axis so that proper rotation of the mirror 14 can bring any desired line of the image 10 to focus on the detector 12.

The signal from each of the discrete sensor elements in the detector 12 is connected to a discrete light emitting element (typically an LED) in a linear array 16. The visible light emission of this array 16 is reflected off the back surface 18 of the scan mirror 14, and an observer 20 viewing this back mirror surface 18 through an appropriate optical system 22 will see a recreation of the input IR scene 10 as the mirror 14 scans that scene 10 across the IR detector 12. Each individual connection path normally includes an amplifier with offset and linearity adjustments to compensate for pixel to pixel sensitivity and emissivity variations in both the detectors and emitters.

Advanced IR sensors are usually composed of a number of rows of pixel elements rather than a single row. The addition of many more pixel elements on each detector results in a very large number of output connections. Such interconnections are often a source of yield loss in manufacture and a cause of failure in the field. Therefore, these advanced sensors often abandon parallel pixel outputs in favor of a serial shift register output for each row of pixels. Connecting these serial outputs to an array of LEDs would require a complex arrangement such as a monolithic LED substrate that would include serial to parallel convertors or a complex hybrid substrate that packaged multiple single line LED arrays on a superstrate with individual serial to parallel convertor chips. Cost effective LED arrays of this type are beyond the current state of the art, so a different type of display is needed. The typical solution, shown in FIG. 2, has been to digitize and store, in a digital video memory 70, the multiple parallel or serial outputs 72 of the multiline IR sensor 74. The video memory 70 is then read out in a serial fashion in order to drive a CRT display 76 or read out in a parallel fashion to drive a hybrid array of linear LED elements 78.

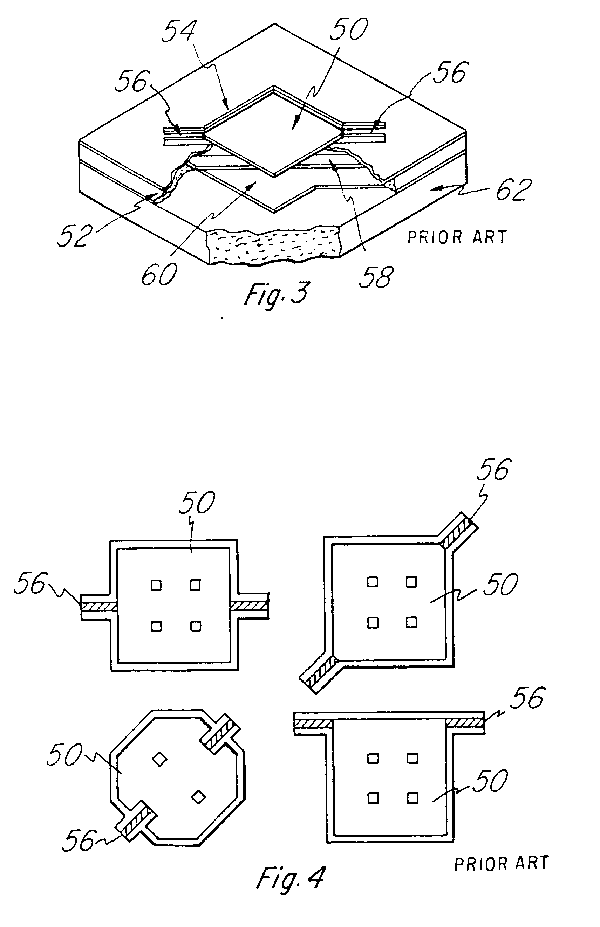

The torsion beam DMD may be used for the embodiments described below. The torsion beam DMD pixel, as shown in FIG. 3 and FIG. 4, generally consists of a thick reflective beam 50 suspended over an air gap/spacer 52 and connected to rigid supports or support layer 54 by two thin torsion hinges 56 that are under tension. When an address electrode 58, underlying the beam 50, is energized, the torsion hinges 56 are twisted and the beam 50 rotates about the axis of the two hinges 56 coming to rest on an underlying landing electrode 60. The structure is generally formed on a substrate 62 of material such as silicon. FIG. 4 shows several hinge options which may be used in the torsion beam DMD.

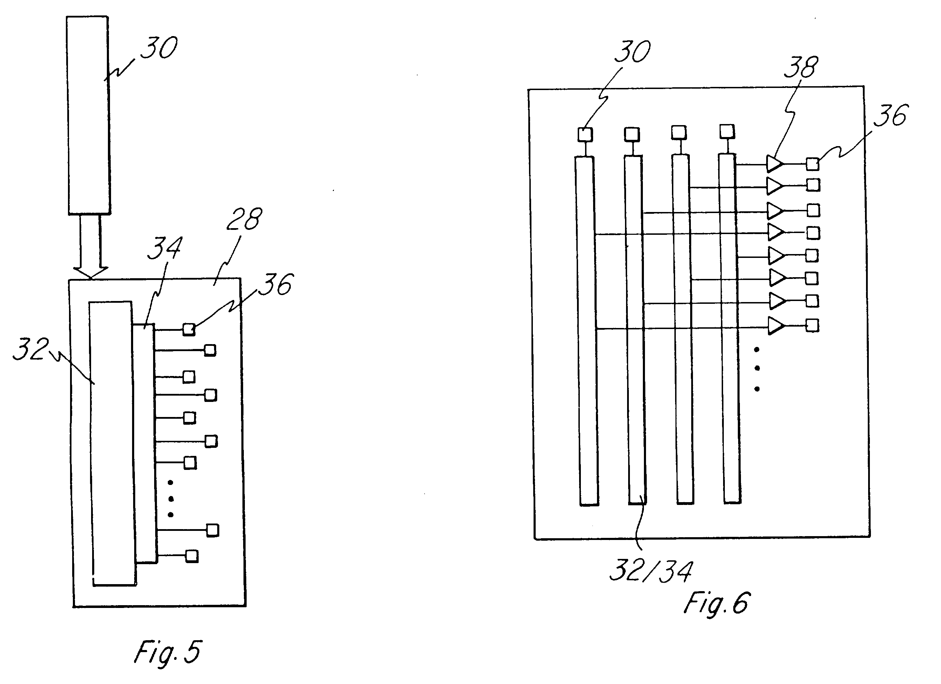

A solution to the advanced IR system display problem is presented in a first preferred embodiment, shown in FIG. 5. A DMD chip 28 may be fabricated such that the architecture of the chip is essentially the reverse of the IR sensor device 30 architecture. A number of analog serial shift registers 32 may be fabricated on the chip 28, or, if desired, may be external to the DMD chip. Their number and length match the number and length of the output shift registers on the IR sensor device 30. Each of these shift registers 32 feeds, preferably through serial to parallel convertors 34, the same number of DMD pixel elements 36 as fed the corresponding shift register on the IR device 30. The individual DMD pixels 36 may be arrayed (except perhaps for an overall scale factor) as the input IR device 30 pixels were arrayed. Thus, a visible (or other wavelength) light source reflected from the DMD will create an illumination pattern nearly identical to that incident on the sensor 30 in the IR spectrum.

In a second preferred embodiment, the reproduced image may be projected onto and viewed in reflection from the backside 18 of the scan mirror 14, shown in FIG. 1. The operation of the conventional IR system may be recreated without the expense of either a digital scan convertor or a complex LED assembly.

Intensity can be encoded in this reflected image in several ways. One method is analog modulation. If the outputs of the DMD's analog shift registers/serial to parallel convertors 32,34 are connected directly to the addressing electrodes beneath the pixels 36, then the deflection of each pixel 36 will be proportional to the analog signal and hence proportional to the input IR light intensity. This degree of DMD tilt is commonly used to achieve analog light modulation through the use of dark field optics.

In the dark field system, the DMD may be aligned so that light reflected from a fully tilted DMD pixel falls completely within the aperture of the display optical system. The optical system may be designed with a limited aperture so that light reflected from an undeflected pixel falls completely outside the aperture. Obviously, intermediate positions reflect an intermediate amount of light into the optical aperture and hence create an intermediate level of brightness in the plane of the projected image.

Another method to encode intensity is pulse width modulation. The accuracy of an image recreation based on analog modulation depends on a number of factors including the linearity and uniformity of the DMD pixel tilt angle and proper apodization of the projection optical system. Using pulse width modulation with the dark field optics described above eliminates both of these concerns.

In a third preferred embodiment, shown in FIG. 6, instead of driving the DMD pixels 36 directly from the outputs of the shift registers/serial to parallel convertors 32,34, a ramp comparator amplifier 38(or any comparator type circuit that provides the same functionality) may be placed between each shift register/serial to parallel convertor 32,34 output and the corresponding DMD 36 address electrode.

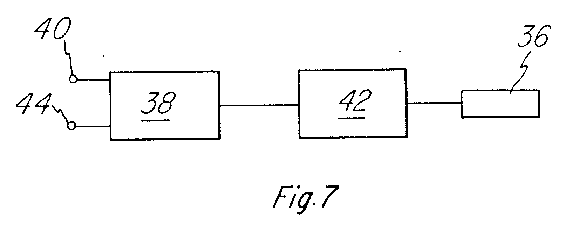

As shown in FIG. 7, at the end of each serial to parallel conversion three things happen: the analog outputs of the shift register/serial to parallel convertor 32,34 (FIG. 6) are placed on one input 40 of a comparator at each DMD pixel 36 location, a pixel driver amplifier 42 at each pixel 36 location may be switched on so as to drive each pixel 36 to its fully tilted position, and a voltage common to all of the other comparator inputs 44 begins to ramp from the lowest detectable shift register signal level to the highest detectable shift register signal level.

The rate of this ramp is such that it reaches its maximum voltage at the completion of the line time. The comparator 38 outputs are connected to the pixel driver amplifier 42 inputs so that when each comparator 38 toggles, the associated pixel driver amplifier 42 output falls to zero and the associated DMD pixel 36 returns to its untilted state. Thus, the amount of time a given pixel spends tilted during a single line time (and hence the amount of light it provides to the displayed image during that line time) are directly proportional to the voltage delivered to that pixel 36 by the shift register/serial to parallel convertor 32,34.

Either of these modulation schemes can be used to emulate the operation of a digital scan convertor in those instances where a separate display (i.e. one that does not rely on the scanning provided by the backside of an input scan mirror) is desired. As an example of this scan convertor functionality, the DMD may be imaged onto the top row of an area array CCD (or other solid state) detector. At the end of each line time the charge generated in the CCD may be shifted down one row in a systolic fashion. This sequence proceeds throughout the video frame time until the entire input image is stored in the CCD. At this time the CCD can be read out directly into the video of CRT or other display system. The DMD may be imaged onto the CCD in many different ways. Multiple DMDs and CCDs may be combined and their outputs manipulated electronically to accomplish complex optical processing tasks.

Conversely, a linear DMD modulator can be used to create a display from imagery stored, for example, in CCD or in a digital frame memory. The serial analog data stream, which may be derived directly from the CCD or from the frame memory through a digital to analog convertor, is in put to the analog shift register that was originally described as being fed from the IR detector. A scanning mirror may then be driven in the same manner as a conventional IR system scanning mirror would be driven, and the image, projected line by line from the DMD is viewed in reflection from the mirror surface.

In cases where digital data is easily available or where digital operation is deemed preferable, the DMD is easily utilized in a digital mode. This digital mode requires the fabrication of a unique DMD, similar in construction to those described above. For a digital data stream of N bits of resolution, a linear DMD with N input shift registers would be fabricated. Each shift register would represent a different digital resolution bit, from the most significant bit to the least significant bit. Each shift register would directly address its own line of DMD elements. Each line of elements would be activated at the beginning of each line time. The most significant bit line would be turned off half way through the line time, the next most significant, one quarter through the line time, the third, one eighth, and so on. In this way each pixel in each line of the image would be illuminated by N pixels, and each of those pixels would provide illumination for a time period proportional to its weight in the binary sum. Thus the total N bit binary light amplitude would be provided.

A simpler implementation of this binary illumination weighting can be provided through spatial weighting as opposed to temporal weighting. As above, an N bit binary data stream drives N input shift registers. However, in this scheme each pixel along the shift register is spatially weighted. For example, in a system with seven bits of resolution the most significant bit shift register would drive 64 pixels at each DMD location. The next most significant bit 32 pixels. The next 16, and so on. This method requires no sub-line time temporal resolution, since a given percent illumination weight is provided by a percent of the reflective area utilization rather than by a percent of the available time utilization. These two methods of binary illumination weighting (temporal and spatial) may be combined. The result is higher resolution pixels due to the increased dynamic range of the combined methods.

The DMD may be used in many different embodiments to provide a display device. The DMD can be configured, along with an appropriate optical system, to provide a scan convertor function with a small size, weight, cost, and power budget. Additionally, the resultant DMD system is capable of displaying any stored digital image or analog data stream, regardless of its source, for viewing.

Several preferred embodiments have been described in detail hereinabove. It is to be understood that the scope of the invention also comprehends embodiments different from those described, yet within the scope of the claims. For example, the input device is described as an IR sensor, however, the input could come from many different sources, such as a television signal or a computer. Dark-field optics are discussed in relation to the use of this system, however, Schlieren optics or other appropriate optics systems may be used. Similarly, the DMD may be used to display the image directly or onto another detector for possible manipulation prior to display. Words of inclusion are to be interpreted as nonexhaustive in considering the scope of the invention.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method of digitally modulating a DMD system comprising:
receiving at least one data stream from an input device (30); and
addressing and activating one or more DMDs (36);
characterized in that the method further comprises
a) receiving at least one data stream of data of N bits of resolution per pixel from said input device (30);
b) inputing said data stream into N input shift registers (32);
c) addressing at least N binary weighted fixed size DMDs (36) with said shift registers (32), with output of said DMDs (36) being combined to create one pixel of an image; and
d) activating said DMDs (36) based on said data stream.

2. The method of claim 1, characterized in that the or each of said activated DMDs (36) is turned off individually such that each of said activated DMDs (36) is left on for a period of time equal to a line time multiplied by a weighting for that DMD (36).

3. The method of claim 2, characterized in that the DMDs (36) are weighted by time.

4. The method of claim 2 or claim 3, characterized in that weighting of said weighted DMDs (36) is based on said resolution per pixel such that a most significant bit is weighted 1/2, a next most significant bit is weighted 1/4, continuing weighting to a least significant bit which is weighted 1/2 ^{N}.

5. The method of any of claims 2 to 4, characterized in that said weighting is by a predetermined number of DMDs (36) per bit, whereby the DMDs (36) can be weighted by number of DMDs (36) per bit.

6. The method of any of claims 2 to 5, characterized in that said weighting is such that one or more of said DMDs (36) reflect different maximum amounts of light, whereby the DMDs (36) can be weighted by reflecting area and/or reflectance of an individual DMD (36).

7. The method of any preceding claim, characterized in that a detector manipulates the image from said DMDs (36), whereby said image is output in a different order from said detector than said image was input to said detector.

8. The method of any preceding claim, characterized in that addressing one or more DMDs (36) comprises addressing 2^{N} DMDs (36) with said shift registers (32), whereby the shift register (32) for a most significant bit addresses 2^{N-1} DMDs (36), the shift register (32) for a next most significant bit addresses 2^{N-2} DMDs, continuing this addressing scheme to a least significant bit whose shift register addresses 2^{N-N} DMDs.

9. The method of any preceding claim, characterized in that said DMD (36) is imaged onto a solid state detector.

10. The method of claim 9, characterized in that said detector is a CCD.

11. The method of any preceding claim, characterized in that said DMD (36) is imaged onto the backside of a scan mirror (18).

12. The method of claim 11, characterized in that an image from said backside of said mirror (18) is optically projected to create an image nearly identical to said image received at said input device (30).

13. The method of any preceding claim, characterized in that said input device (30) is a computer.

14. A digitally modulated DMD system comprising:
means to receive at least one data stream of an input device (30); and
DMDs (36) addressed by said receiving means;
characterized by
a) N shift registers (32) to receive at least one data stream of data of N bits of resolution from an input device (30); and
b) N binary weighted fixed size DMDs (36) adressed by said shift registers (32); wherein said DMDs (36) combine to create one pixel of an image per data stream.

15. The system of claim 14, characterized in that it further comprises a serial to parallel convertor (34) connected to said shift register (32).

16. The system of claim 15, characterized in that it further comprises a comparator (38) connected to the output of the serial to parallel convertor (34) and to a ramp voltage.

17. The system of claim 16, characterized in that the comparator (38) is a ramp comparator.

18. The system of any of claims 14 to 17, characterized in that said DMDs (36) are imaged onto a solid state detector.

19. The system of claim 18, characterized in that said detector is a CCD.

20. The system of claim 18 or claim 19, characterized in that said detector manipulates the image from said DMDs (36), whereby said image is output in a different order from said detector than said image was input to said detector.

21. The sytem of any of claims 14 to 20, characterized in that said DMD (36) is a torsion beam DMD.

22. The system of any of claims 14 to 21, characterized in that said DMD (36) is imaged onto the backside of a scan mirror (18).

23. The system of any of claims 14 to 22, characterized in that the input device (30) is an IR sensor.

24. The system of any of claims 14 to 24, characterized in that the input device (30) is a computer.

25. The system of any of claims 14 to 24, characterized in that said shift register (32) and said DMDs (36) are on a monolithic integrated circuit.

26. The system of claim 25, characterized in that the monolithic integrated circuit includes the comparator (38).

27. The system of any of claims 14 to 25, characterized in that the system is in the form of a scan converter.

## Patentansprüche

1. Verfahren zum digitalen Modulieren eines DMD-Systems, umfassend:
es wird wenigstens ein Datenstrom von einer Eingabevorrichtung (30) empfangen; und
es werden eine oder mehrere DMDs (36) adressiert und aktiviert;
dadurch gekennzeichnet, daß das Verfahren darüber hinaus umfaßt:
a) es wird wenigstens ein Datenstrom aus Daten mit N Bits für die Auflösung pro Pixel von der Eingabevorrichtung (30) empfangen;
b) es wird der Datenstrom in N Eingabeschieberegister (32) eingegeben;
c) es werden wenigstens N binär gewichtete, eine festgelegte Größe aufweisende DMDs (36) mit den Schieberegistern (32) adressiert, wobei die Ausgangssignale der DMDs (36) so kombiniert werden, daß ein Pixel eines Bildes erzeugt wird; und
d) es werden die DMDs (36), basierend auf dem Datenstrom, aktiviert.

2. Verfahren nach Anspruch 1, dadurch gekennzeichnet, daß die oder jede der aktivierten DMDs (36) so einzeln ausgeschaltet wird, daß jede der aktivierten DMDs (36) für eine Zeitdauer eingeschaltet ist, die einer Zeilendauer multipliziert mit einer Gewichtung für diese DMD (36) entspricht.

3. Verfahren nach Anspruch 2, dadurch gekennzeichnet, daß die DMDs (36) nach der Zeit gewichtet sind.

4. Verfahren nach Anspruch 2 oder Anspruch 3, dadurch gekennzeichnet, daß die Gewichtung der gewichteten DMDs (36) in der Weise auf der Auflösung pro Pixel basiert, daß ein wichtigstes Bit die Gewichtung 1/2 erhält, ein zweitwichtigstes Bit die Gewichtung 1/4 erhält, wobei die Gewichtung so fortgesetzt wird, daß das am wenigsten wichtige Bit die Gewichtung 1/2^{N} erhält.

5. Verfahren nach einem der Ansprüche 2 bis 4, dadurch gekennzeichnet, daß die Gewichtung aus einer vorherbestimmten Anzahl von DMDs (36) pro Bit besteht, wodurch die DMDs (36) nach der Anzahl der DMDs (36) pro Bit gewichtet werden können.

6. Verfahren nach einem der Ansprüche 2 bis 5, dadurch gekennzeichnet, daß die Gewichtung so erfolgt, daß eine oder mehrere der DMDs (36) unterschiedliche maximale Lichtmengen reflektieren, wodurch die DMDs (36) nach der reflektierenden Fläche und/oder nach dem Reflektionsvermögen einer einzelnen DMD (36) gewichtet werden können.

7. Verfahren nach einem der vorhergehenden Ansprüche, dadurch gekennzeichnet, daß ein Detektor das Bild von den DMDs (36) manipuliert, wodurch das Bild in einer anderen Anordnung von dem Detektor ausgegeben wird, als es in den Detektor eingegeben wurde.

8. Verfahren nach einem der vorhergehenden Ansprüche, dadurch gekennzeichnet, daß das Adressieren einer oder mehrerer DMDs (36) das Adressieren von 2^{N} DMDs (36) mit den Schieberegistern (32) umfaßt, wodurch das Schieberegister (32) für ein wichtigstes Bit 2^{N-1} DMDs (36) adressiert, das Schieberegister (32) für ein zweitwichtigstes Bit 2^{N-2} DMDs adressiert, wobei dieses Adressierungsschema bis zu einem am wenigsten wichtigen Bit fortgesetzt wird, dessen Schiebe-register 2^{N-N} DMDs adressiert.

9. Verfahren nach einem der vorhergehenden Ansprüche, dadurch gekennzeichnet, daß die DMD (36) auf einen Festkörperdetektor abgebildet wird.

10. Verfahren nach Anspruch 9, dadurch gekennzeichnet, daß der Detektor eine CCD ist.

11. Verfahren nach einem der vorhergehenden Ansprüche, dadurch gekennzeichnet, daß die DMD (36) auf die Rückseite eines Abtastspiegels (18) abgebildet wird.

12. Verfahren nach Anspruch 11, dadurch gekennzeichnet, daß ein Bild von der Rückseite des Spiegels (18) optisch projiziert wird, um ein Bild zu erzeugen, das nahezu mit dem Bild übereinstimmt, das von der Eingabevorrichtung (30) empfangen wurde.

13. Verfahren nach einem der vorhergehenden Ansprüche, dadurch gekennzeichnet, daß die Eingabevorrichtung (30) ein Computer ist.

14. Digital moduliertes DMD-System, umfassend:
Mittel, um wenigstens einen Datenstrom von einer Eingabevorrichtung (30) zu empfangen; und
DMDs (36), die durch die Empfangsmittel adressiert werden,
gekennzeichnet durch
a) N Schieberegister (32), um wenigstens einen Datenstrom aus Daten mit N Bits für die Auflösung von einer Eingabevorrichtung (30) zu empfangen; und
b) N binär gewichtete, eine festgelegte Größe aufweisende DMDs (36), die durch die Schieberegister (32) adressiert werden; wobei die DMDs (36) so kombiniert werden, daß sie ein Pixel eines Bildes pro Datenstrom erzeugen.

15. System nach Anspruch 14, dadurch gekennzeichnet, daß es darüber hinaus einen Seriell/Parallel-Wandler (34) umfaßt, der mit dem Schieberegister (32) verbunden ist.

16. System nach Anspruch 15, dadurch gekennzeichnet, daß es darüber hinaus einen Komparator (38) umfaßt, der mit dem Ausgang des Seriell/Parallel-Wandlers (34) und mit einer Rampenspannung verbunden ist.

17. System nach Anspruch 16, dadurch gekennzeichnet, daß der Komparator (38) ein Rampenkomparator ist.

18. System nach einem der Ansprüche 14 bis 17, dadurch gekennzeichnet, daß die DMDs (36) auf einen Festkörperdetektor abgebildet werden.

19. System nach Anspruch 18, dadurch gekennzeichnet, daß der Detektor eine CCD ist.

20. System nach Anspruch 18 oder Anspruch 19, dadurch gekennzeichnet, daß der Detektor das Bild von den DMDs (36) manipuliert, wodurch das Bild in einer anderen Anordnung von dem Detektor ausgegeben wird, als es in den Detektor eingegeben wurde.

21. System nach einem der Ansprüche 14 bis 20, dadurch gekennzeichnet, daß die DMD (36) eine Torsionsbalken-DMD ist.

22. System nach einem der Ansprüche 14 bis 21, dadurch gekennzeichnet, daß die DMD (36) auf die Rückseite eines Abtastspiegels (18) abgebildet wird.

23. System nach einem der Ansprüche 14 bis 22, dadurch gekennzeichnet, daß die Eingabevorrichtung (30) ein IR-Sensor ist.

24. System nach einem der Ansprüche 14 bis 24, dadurch gekennzeichnet, daß die Eingabevorrichtung (30) ein Computer ist.

25. System nach einem der Ansprüche 14 bis 24, dadurch gekennzeichnet, daß das Schieberegister (32) und die DMDs (36) sich auf einer monolithischen integrierten Schaltung befinden.

26. System nach Anspruch 25, dadurch gekennzeichnet, daß die monolithische integrierte Schaltung den Komparator (38) enthält.

27. System nach einem der Ansprüche 14 bis 25, dadurch gekennzeichnet, daß das System die Form eines Abtastbildwandlers aufweist.

## Revendications

1. Procédé de modulation numérique d'un système à dispositif à mémoire déformable comportant les étapes consistant à recevoir au moins un flux de données provenant d'un dispositif d'entrée (30) ; et adresser et activer au moins un dispositif à mémoire déformable (36); caractérisé en ce que le procédé comporte en outre les étapes consistant à :
a) recevoir au moins un flux de données de n bits de résolution par pixels provenant du dispositif d'entrée (30) ;
b) présenter le flux de données en entrée de N registres à décalage d'entrée (32) ;
c) adresser au moins N dispositifs à mémoires déformables binaires de taille fixe et pondérés (36) avec les registres à décalages (22), les sorties des dispositifs à miroir déformable (36) étant combinées pour créer un pixel d'une image ; et
d) activer les dispositifs à miroir déformable (36) sur la base du flux de données.

2. Procédé selon la revendication 1, caractérisé en ce que le ou chaque dispositif à miroir déformable activé (36) est mis hors service individuellement de sorte que chaque dispositif à miroir déformable (36) est mis en service pendant une période de temps égale à un temps de ligne multiplié par une pondération pour ce dispositif à miroir déformable (36).

3. Procédé selon la revendication 2, caractérisé en ce que les dispositifs à miroir déformable (36) sont pondérés en temps.

4. Procédé selon l'une des revendications 2 et 3, caractérisé en ce que la pondération des dispositifs à miroir déformable pondérés (36) est basée sur ladite résolution par pixel de sorte qu'un bit le plus significatif est pondéré par un demi, un bit le plus significatif suivant est pondéré par un quart, en continuant la pondération jusqu'à un bit le moins significatif qui est pondéré par 1/2^{N}.

5. Procédé selon l'une quelconque des revendications 2 à 4, caractérisé en ce que ladite pondération s'effectue selon un nombre prédéterminé de dispositifs à miroir déformable (36) par bit, de sorte que les dispositif à miroir déformable (36) peuvent être pondérés selon un nombre de dispositifs à miroir déformable (36) par bit.

6. Procédé selon l'une quelconque des revendications 2 à 5, caractérisé en ce que ladite pondération est adaptée pour que un ou plusieurs desdits dispositifs à miroir déformable (36) réfléchissent des quantités maximales de lumières différentes, de sorte que les dispositifs à miroir déformable (36) peuvent être pondérés par zone réfléchissante et/ou réflectance d'un dispositif à miroir déformable individuel (36).

7. Procédé selon l'une quelconque des revendications précédentes, caractérisé en ce qu'un détecteur manipule l'image provenant des dispositifs à miroir déformable (36), de sorte que ladite image est délivrée en sortie dans un ordre différent en provenance du détecteur de celui selon lequel l'image a été entrée dans ledit détecteur.

8. Procédé selon l'une quelconque des revendications précédentes, caractérisé en ce que l'adressage d'au moins un dispositif à miroir déformable (36) comporte l'adressage de 2^{N} dispositifs à miroir déformable (36) avec lesdits registres à décalage (32), de sorte que le registre à décalage (32) pour un bit le plus significatif adresse 2^{N-1} dispositifs à miroir déformable (36), le registre à décalage (32) pour un bit le plus significatif suivant adresses 2^{N-2} dispositifs à miroir déformable, en continuant ce mode d'adressage jusqu'à un bit le moins significatif dont le registre à décalage adresse 2^{N-N} dispositif à miroir déformable.

9. Procédé selon l'une quelconque des revendications précédentes, caractérisé en ce que le dispositif à miroir déformable (36) est imagé sur un détecteur à semiconducteurs.

10. Procédé selon la revendication 9, caractérisé en ce que le détecteur est un dispositif à couplage de charges.

11. Procédé selon l'une quelconque des revendications précédentes, caractérisé en ce que ledit dispositif à miroir déformable (36) est imagé sur le côté postérieur d'un miroir de balayage (18).

12. Procédé selon la revendication 11, caractérisé en ce qu'une image provenant du côté postérieur du miroir (18) est projeté optiquement pour créer une image sensiblement identique à l'image reçue par le dispositif d'entrée (30).

13. Procédé selon l'une quelconque des revendications précédentes, caractérisé en ce que le dispositif d'entrée (30) est un calculateur.

14. Système à dispositifs à miroir déformable modulé numériquement comprenant :
des moyens pour recevoir au moins un flux de données d'un dispositif d'entrée (30) ; et
des dispositifs à miroir déformable (36) adressés par les moyens de réception ;
caractérisé en ce qu'il comprend :
a) N registres à décalages (32) pour recevoir au moins un flux de données de N bits de résolution provenant du dispositif d'entrée (30) ; et
b) N dispositifs à miroir déformable binaires de taille fixe, pondérés, adressés par les registres à décalage (32), dans lequel les dispositifs à miroir déformable sont combinés pour créer un pixel d'une image par flux de données.

15. Système selon la revendication 14, caractérisé en ce qu'il comporte en outre un convertisseur série-parallèle (34) connecté aux registres à décalage (32).

16. Système selon la revendication 15, caractérisé en ce qu'il comporte en outre un comparateur (38) connecté à la sortie du convertisseur série-parallèle (34) et à une tension en forme de rampe.

17. Système selon la revendication 16, caractérisé en ce que le comparateur (38) est un comparateur de rampe.

18. Système selon l'une quelconque des revendications 14 à 17, caractérisé en ce que lesdits dispositifs à miroir déformable (36) sont imagés sur un détecteur à semiconducteurs.

19. Système selon la revendication 18, caractérisé en ce que détecteur est un dispositif à couplage de charges.

20. Système selon l'une des revendications 18 et 19, caractérisé en ce que ledit détecteur manipule l'image provenant des dispositifs à miroir déformable (36), de sorte que ladite image est délivrée en sortie selon un ordre différent en provenance dudit détecteur de celui de l'entrée de ladite image vers ledit détecteur.

21. Système selon l'une quelconque des revendications 14 à 20, caractérisé en ce que le dispositif à miroir déformable (36) est un dispositif à miroir déformable à faisceaux de torsion.

22. Système selon l'une quelconque des revendications 14 à 21, caractérisé en ce que le dispositif à miroir déformable (36) est imagé sur le côté postérieur d'un miroir de balayage (18).

23. Système selon l'une quelconque des revendications 14 à 22, caractérisé en ce que le dispositif d'entrée (30) est un capteur à infrarouge.

24. Système selon l'une quelconque des revendications 14 à 24, caractérisé en ce que le dispositif d'entrée (30) est un calculateur.

25. Système selon l'une quelconque des revendications 14 à 24, caractérisé en ce que le registre à décalage (32) et les dispositifs à miroir déformable (36) sont disposés sur un circuit intégré à semiconducteurs.

26. Système selon la revendication 25, caractérisé en ce que le circuit intégré à semiconducteurs comporte le comparateur (38).

27. Système selon l'une quelconque des revendications 14 à 25, caractérisé en ce que le système a la forme d'un convertisseur de balayage.
